(19) Europäisches Patentamt / European Patent Office / Office européen des brevets

(11) **EP 3 761 705 B1**

(12) **EUROPEAN PATENT SPECIFICATION**

(45) Date of publication and mention
of the grant of the patent:
**25.02.2026 Bulletin 2026/09**

(21) Application number: **19811984.4**

(22) Date of filing: **29.05.2019**

(51) International Patent Classification (IPC):
*H04W 36/00* *(2009.01)* *H04W 36/20* *(2009.01)*

(52) Cooperative Patent Classification (CPC):
**H04W 36/20; H04W 36/00835;** H04W 36/00837;
H04W 36/302

(86) International application number:
**PCT/CN2019/088996**

(87) International publication number:
**WO 2019/228395 (05.12.2019 Gazette 2019/49)**

(54) **INTERFERENCE PROCESSING METHOD, APPARATUS AND STORAGE MEDIUM**

INTERFERENZVERARBEITUNGSVERFAHREN, -VORRICHTUNG UND SPEICHERMEDIUM

PROCÉDÉ ET APPAREIL DE TRAITEMENT D'INTERFÉRENCES ET SUPPORT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2018 CN 201810533669**

(43) Date of publication of application:
**06.01.2021 Bulletin 2021/01**

(73) Proprietor: **ZTE Corporation**
**Shenzhen, Guangdong 518057 (CN)**

(72) Inventors:
• **ZENG, Zhaohua**
**Shenzhen Guangdong 518057 (CN)**
• **NIU, Kang**
**Shenzhen Guangdong 518057 (CN)**
• **GAO, Chao**
**Shenzhen Guangdong 518057 (CN)**

(74) Representative: **WBH Wachenhausen**
**Patentanwälte PartG mbB**
**Müllerstraße 40**
**80469 München (DE)**

(56) References cited:
EP-A1- 2 882 230    WO-A1-2012/154100
WO-A1-2016/112530   CN-A- 101 808 381
CN-A- 101 808 381   CN-A- 102 056 211
CN-A- 103 188 749   CN-A- 103 188 749
US-A1- 2011 200 014 US-A1- 2014 064 253
US-A1- 2015 043 369 US-A1- 2016 212 674
US-A1- 2016 323 787

## Description

### TECHNICAL FIELD

Embodiments of the present invention relate to the technical field of communication, for example, to an interference processing method, apparatus, system, and a storage medium.

### BACKGROUND

Inter-cell handover means that, when a mobile terminal enters another cell from one cell during a call, real-time control can be realized by a network, and the mobile station is handed in a certain channel for a new cell from the channel used by the original cell, ensuing an uninterrupted call. A common inter-cell handover method is to select neighboring cells according to the downlink signal quality of neighboring cells reported by a mobile terminal. A neighboring cell with better downlink signal quality is more easily selected as a preferential handover target. Even if there is a neighboring cell selection strategy based on load or neighboring cell priority or the like, a neighboring cell with better downlink quality is preferentially selected, from a filter result set, as a final handover target. However, this method can only ensure that the terminal is preferentially handed in a neighboring cell with low downlink interference. In practical applications, uplink signals will cause interference (such as in an atmospheric waveguide scene), and the existence of uplink interference will affect the call quality, so that the user experience is significantly reduced.

Therefore, there is a need to provide an interference processing method, apparatus, system and a storage medium, which enable a UE to avoid uplink interference.

The document WO2016112530A1 discloses methods and devices for mobility control of UEs in a HetNet with multiple frequency carriers. In the methods, intra-frequency measurement and inter-frequency measurement are performed sequentially for determining a target cell to handover to.

The document US2014064253A1 discloses a method for reducing call drops in uplink power limited scenarios. The method can include a wireless communication device determining that the wireless communication device is experiencing an uplink power limited condition in which a transmission power of the wireless communication device is limited to a level below a power class level of the wireless communication device. The method can further include defining a downlink power threshold for sending a measurement report for triggering a handover based on the uplink power limited condition. The downlink power threshold can be higher than a threshold configured by a serving base station. The method can additionally include determining based on measured downlink power that the calculated downlink power threshold is satisfied and sending a measurement report for triggering a handover to the serving base station in response to the downlink power threshold being satisfied.

Document WO2012154100A1 discloses a handover method from a macrocell to a picocell and, in particular when the UE is connected to the macrocell and is located in the CRE-area of the picocell, the macrocell decides, based on the link quality of UE in the CRE-zone of the picocell and on if the UL interference - which it received via interference reports from the UE- is above a threshold, to hanover to the picocell.

### SUMMARY

The present invention is set out in the appended set of claims.

In view of the above problem, it is therefore an object of the embodiments of the present invention to provide an interference processing method, apparatus, and storage medium, so as to solve the problem that the presence of uplink interference in the existing technology affects the call quality and significantly reduces the user experience.

### BRIEF DESCRIPTION OF DRAWINGS

FIG. 1 is a flowchart of an interference processing method according to Embodiment one of the present invention;

FIG. 2 is a schematic diagram showing state of an uplink interfered cell according to this embodiment of the present invention;

FIG. 3 is a schematic diagram showing location of a to-be-migrated UE in a candidate target cell according to this embodiment of the present invention;

FIG. 4 is a flowchart of another interference processing method according to Embodiment two of the present invention;

FIG. 5 is a flowchart of a first method in a first scenario of still another interference processing method according to Embodiment three of the present invention;

FIG. 6 is a flowchart of a second method in the first scenario according to Embodiment three of the present invention;

FIG. 7 is a flowchart of a third scenario according to Embodiment three of the present invention;

FIG. 8 is a flowchart of a fourth scenario according to Embodiment three of the present invention;

FIG. 9 is a flowchart of a fifth scenario according to Embodiment three of the present invention;

FIG. 10 is a flowchart of a sixth scenario according to Embodiment three of the present invention;

FIG. 11 is a block diagram of an interference processing apparatus according to Embodiment four of the present invention; and

FIG. 12 is a structural diagram of an interference processing system according to Embodiment five of the present invention.

The implementation of the object, functional features and advantages of the embodiments of the present invention will be further described with reference to the accompanying drawings in combination with the embodiments.

## DETAILED DESCRIPTION

Embodiments of the present invention are described in further detail with reference to the accompanying drawings and examples. It should be understood that the specific embodiments described herein are used to explain the embodiments of the present invention, and shall not be construed to limit thereto.

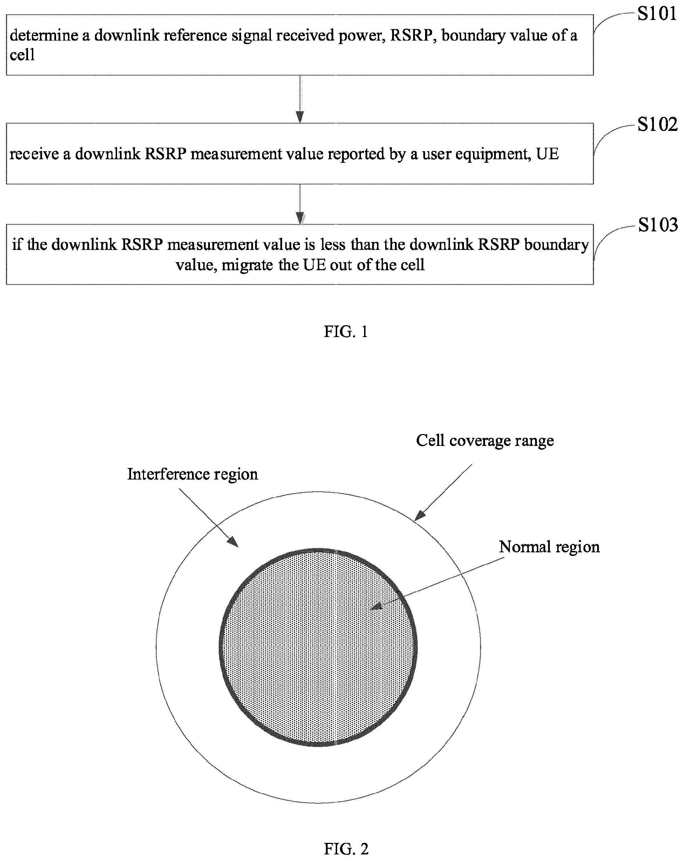

Embodiment one of the present invention provides an interference processing method, which is applied to a first communication node. With reference to FIG. 1, the method includes steps S101, S102 and S103.

In the step S101, a downlink reference signal received power (RSRP) boundary value of a cell is determined.

In the step S102, a downlink RSRP measurement value reported by a user equipment (UE) is received.

In the step S103, when the downlink RSRP measurement value is less than the downlink RSRP boundary value, the UE is migrated out of the cell.

FIG. 2 is a schematic diagram showing state of an uplink interfered cell. The cell coverage range in FIG. 2 refers to a range which can be covered by the signals in the cell, as indicated by an outer circle of a thin line in FIG. 2. This cell is an interfered cell which consists of a "normal region" and an "interference region".

The normal region is indicated by a pattern-filled area shown in FIG. 2. Within this range, the cell can be basically considered as being under weak interference or interference-free, and a normal call quality can be ensured. In practical applications, the closer to the cell is, the less the path loss is, and the better the signal received by the base station is. Therefore, in case of uplink interference, the interference is more obvious if the terminal is farther away from the cell. Otherwise, the interference is not obvious. Therefore, the normal region is a valid part of the interfered cell.

The interference region is beyond the pattern-filled area shown in FIG. 2 and within the cell coverage range, that is, it is a region between the normal region of the interfered cell and the border of the interfered cell. This region is under relatively strong interference, and it is not recommended for mobile users to access this region. This is because the user perception is very poor even if the user accesses this region. Therefore, this region is an invalid part of the interfered cell.

In practical applications, when a base station identifies uplink interference by regular interference detection, the base station performs baseband anti-interference processing, notifies an interfered cell that it is subjected to uplink interference, and notifies the interfered cell of a noise interference (NI) power value.

When the interfered cell learns that it is an uplink interfered cell, to ensure the user perception, the interfered cell determines its own normal region and interference region, and timely migrates out a UE in the interference region (the user experience is poor in this region) through handover. Meanwhile, interaction may be performed with a surrounding neighboring cell to ensure that the neighboring cell enable a UE that is to be handed therein (now referred to as a local cell, to be handed in a normal region of the local cell.

In practical applications, the boundary value of the normal region may be set as a downlink reference signal received power (RSRP) boundary value.

In a possible scheme, the downlink RSRP boundary value of the cell may be determined based on a downlink reference signal transmitted power of the cell, a maximum uplink transmitted power of the user equipment (UE), a noise interference power, the number of receiving antennas of the cell, a minimum receiving signal-to-interference-plus-noise ratio (SINR) and a preset compensation parameter.

In a possible scheme, the downlink RSRP boundary value includes a downlink RSRP boundary value of a voice service and/or a downlink RSRP boundary value of a data service.

In practical applications, when the downlink RSRP boundary value includes a downlink RSRP boundary value of a voice service, the minimum receiving SINR is the minimum receiving SINR of transmission for the voice service; or when the downlink RSRP boundary value is of only a downlink RSRP boundary value of a data service, the minimum receiving SINR is the minimum receiving SINR of transmission for the data service.

In practical applications, in accordance with the calculation formula of the SINR:

$$SINR_{traffic} = Pcmax - (RS_{power} - RSRP) - NI + 10Log(AntNum) + IDP,$$

the following formula can be deduced:

$$RSRP = RS_{power} - Pcmax + NI - 10Log(AntNum) + SINR_{traffic} - IDP,$$

where $RS_{power}$ denotes the downlink reference signal transmitted power of the local cell, Pcmax denotes the maximum uplink transmitted power of the UE, NI denotes the uplink noise interference power of the cell, AntNum denotes the number of receiving antennas of the local cell, $SINR_{traffic}$ denotes the minimum receiving SINR of transmission for different services (including voice services and data services), and IDP stands for Interference Default Parameter which denotes the preset compensation parameter of an interference model.

The RSRP in the formula is the downlink RSRP boundary value of the normal region, and is thus used as the boundary value of the normal region.

The $SINR_{traffic}$ may be configured in the background, and is the minimum receiving SINR of transmission for difference services (including voice services and data services). Different services require different channel conditions. For example, voice services require higher channel conditions, while data services may still satisfy the user's needs under poor channel conditions. Therefore, in case of a voice service, it is necessary to distinguish the $SINR_{traffic}$ (voice) from the $SINR_{traffic}$ (data).

Therefore, when there is a voice service for the UE, the downlink RSRP boundary value of the voice service of the local cell is calculated according to the preset formula $RSRP_{voice} = RS - Pcmax + NI - 10Log(AntNum) + SINR_{traffic}(voice) - IDP$.

When there is no voice service for the UE, the downlink RSRP boundary value of the data service of the local cell is calculated according to the preset formula $RSRP_{data} = RS - Pcmax + NI - 10Log(AntNum) + SINR_{traffic}(data) - IDP$.

The IDP is the preset compensation parameter of the interference model (e.g., a compensation parameter of an atmospheric waveguide interference model or compensation parameters of other uplink interference models), and compensation may be performed based on a model of the transmission channel, thermal noise processed by the base station or other factors. The IDP may be configured in the background.

Other parameters such as the NI may be measured by the base station, and the $RS_{power}$ and AntNum may be configured in the background.

In practical applications, there are two methods to acquire the maximum transmitted power Pcmax of a UE. One method is to acquire the Pcmax from base station content reported by a UE. In this case, the acquired Pcmax is the Pcmax of an individual UE. The other method is to replace the Pcmax with a preset Pcmax value (because the Pcmax is same for most UEs).

If the Pcmax reported by each individual UE is substituted into the above formula, a downlink RSRP boundary value (data) and a downlink RSRP boundary value (voice) unique to each UE are calculated.

If the preset Pcmax value is substituted into the above formula, a downlink RSRP boundary value (data) and a downlink RSRP boundary value (voice) of the interfered cell are calculated.

Based on the above formula, it can be seen that the boundary of the normal region is related to the configuration of the cell itself and may be different among different UEs, different service types for a UE and different interference types and strengths. Under normal circumstances, if the interference is lower or the base station processes interference better, the coverage of the normal region is larger. When the interference is eliminated or the baseband of the base station can completely resist against interference, the normal region will be overlapped with the edge of the interfered cell, that is, the interfered cell becomes a completely normal cell. In case of interference, the normal region may be considered as an actually available valid range of the local cell.

In practical applications, before the step S102, the method further includes steps of:

acquiring a downlink RSRP measurement value of the local cell reported by a UE of the local cell;

when there is a voice service for the UE in the local cell, i.e., when there are both a voice service and a data service for the UE in the local cell, or, when there is only a voice service for the UE in the local cell, determining whether the downlink RSRP measurement value is less than the $RSRP_{voice}$;

if the downlink RSRP measurement value is less than the $RSRP_{voice}$, determining that the UE of the local cell is beyond the boundary of the normal region;

when there is no voice service, but there is only data service for the UE in the local cell, determining whether the downlink RSRP measurement value is less than the $RSRP_{data}$;

if the downlink RSRP measurement value is less than the $RSRP_{data}$, determining that the UE of the local cell is beyond the boundary of the normal region.

In practical applications, downlink RSRP measurement values reported by all UEs may be obtained by regular refreshing, and are then compared with the downlink RSRP boundary value.

In practical applications, different services require different channel conditions. For example, voice services require better channel conditions, while data services may still satisfy the user's needs under poor channel conditions. Therefore, in case of a service voice, it is necessary to distinguish the $SINR_{traffic}$ (voice) from the $SINR_{traffic}$ (data).

If there is a voice service for the UE, when the downlink RSRP measurement value of the UE is greater than or equal to the downlink RSRP boundary value (voice), it is considered that the UE is within the normal region where the voice quality can be guaranteed, and it is unnecessary to migrate the UE; however, when the RSRP measurement value of the UE is less than the downlink RSRP boundary value (voice), it is considered that the UE is within the interference region where the voice quality cannot be guaranteed, and it is necessary to migrate the UE out.

If there is no voice service for the UE, when the downlink RSRP measurement value of the UE is greater than or equal to the downlink RSRP boundary value (data), it is considered that the UE is within the normal region where the quality of the data service can be guaranteed, and it is unnecessary to migrate the UE; however, when the RSRP measurement value of the UE is less than the downlink RSRP boundary value (data), it is considered that the UE is within the interference region where the quality of the data service cannot be guaranteed, and it is necessary to migrate the UE out.

In a possible scheme, the method further includes steps of:

receiving an interfered state message of a neighboring cell, and determining a downlink RSRP boundary value of the neighboring cell;
when a downlink RSRP measurement value of a neighboring cell reported by the UE is greater than or equal to the downlink RSRP boundary value of the neighboring cell, selecting the neighboring cell as a candidate target cell for the UE.

In practical applications, the interfered state message of the neighboring cell carries the downlink RSRP boundary value of the neighboring cell; or
the interfered state message of the neighboring cell carries a parameter for calculating the downlink RSRP boundary value of the neighboring cell.

In practical applications, when the local cell receives an interfered state update message transmitted by a neighboring cell, the state of the neighboring cell that triggers this message can be acquired and updated.

If the latest state of the neighboring cell is an interfered state, the parameters carried by the interfered state update message transmitted by the neighboring cell may have two situations. If the local cell decides to hand over and migrate the UE, during selecting from candidate handover target cells, when a candidate cell has an identifier of interfered cell, different processing will be performed based on the carried parameters, and the downlink RSRP boundary value of this interfered neighboring cell is acquired.

1. If the interfered state update message carries two parameters, it is considered that the downlink RSRP boundary (data) and the downlink RSRP boundary value (voice) of the interfered neighboring cell are received and stored in the identifier of the interfered neighboring cell.
If there is a voice service for the UE to be migrated, the downlink RSRP boundary value (voice) of the interfered neighboring cell is directly used; if there is a data service for the UE to be migrated, the downlink RSRP boundary value (data) of the interfered neighboring cell is directly used.

2. If the interfered state update message carries five parameters, it is considered that the calculation parameters for the normal region are carried, and the parameters are stored in the identifier of the interfered neighboring cell.

If there is a voice service for the UE to be migrated, the calculation parameters are substituted into the above formula to calculate the downlink RSRP boundary value (voice) of the interfered neighboring cell, where the calculation parameters include the $RS_{power}$, NI, AntNum, $SINR_{traffic}$ (voice) of the interfered neighboring cell, and the Pcmax of the UE to be migrated.

If there is only a data service for the UE, the calculation parameters are substituted into the above formula to calculate the downlink RSRP boundary value (data) of the interfered neighboring cell, where the calculation parameters include the $RS_{power}$, NI, AntNum, $SINR_{traffic}$ (data) of the interfered neighboring cell, and the Pcmax of the UE to be migrated.

It is to be noted that, the IDP in the above formula may be acquired from the background of the local cell.

In an embodiment, a step of determining whether the UE to be migrated is within the downlink RSRP boundary value of the neighboring cell includes:

acquiring the RSRP measurement of the interfered neighboring cell reported by the UE to be migrated;

determining the service type of the UE to be migrated.

if there is a voice service for the UE to be migrated, then:

when the downlink RSRP measurement value reported by the UE to be migrated is greater than or equal to the downlink RSRP boundary value (voice) of the interfered neighboring cell, it is indicated that the UE to be migrated is already within the coverage of the normal region (voice) of the neighboring cell, and the neighboring cell can be used as a target cell for a subsequent handover. Otherwise, it is indicated that the UE to be migrated is within the interference region, and the interfered neighboring cell is no longer selected as a candidate target cell;

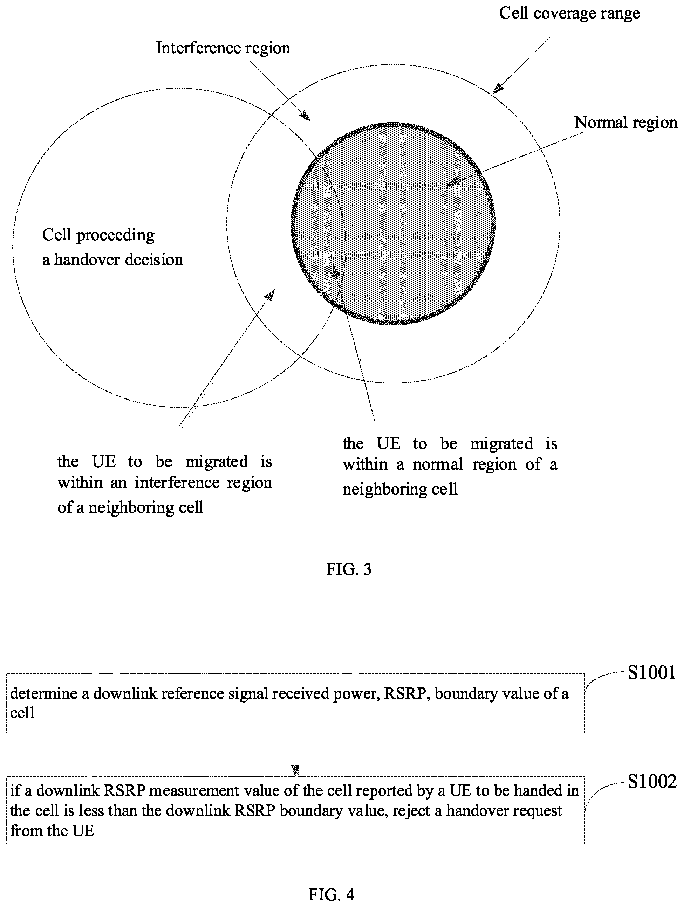

for example, as shown in FIG. 3, if the UE to be migrated is within the normal region of the neighboring cell, the neighboring cell can be used as a target cell for a subsequent handover; and, if the UE to be migrated is within the interference region of the neighboring cell, the interfered neighboring cell is no longer selected as a candidate target cell.

if there is no voice service for the UE, then:
when the downlink RSRP measurement value reported by the UE to be migrated is greater than or equal to the downlink RSRP boundary value (data) of the interfered neighboring cell, it is indicated that the UE to be migrated is already within the coverage of the normal region (data) of the interfered neighboring cell, and the neighboring cell can be used as a target cell for a subsequent handover. Otherwise, it is indicated that the UE to be migrated is within the interference region, and the interfered neighboring cell is no longer selected as a candidate target cell.

In a possible scheme, the method further includes a step of:
transmitting an interfered state message to a neighboring cell, the interfered state message carrying the downlink RSRP boundary value of the neighboring cell or a parameter for calculating the downlink RSRP boundary value of the neighboring cell.

In practical applications, when the local cell is in an interfered state, the local cell may interact with a neighboring cell in the following ways:

1. an interaction by a direct message between base stations, for example, the X2 of the 4th-generation mobile communication technology (4G), the Xn of the 5th-generation mobile communication technology (5G).

2. an interaction by a message transmitted between base stations via a core network (e.g., the S1 of 4G, the NG-C of 5G).

When the local cell changes from a normal cell to an interfered cell, the interfered state update message may carry the following two kinds of information:

1) an interference identifier which indicates the state of the local cell (for example, 0 represents the normal cell, and 1 represents the interfered cell); and

2) the number and content of the carried parameters (either one of the following two modes A and B may be used).

Mode A: two parameters are carried;

the content of the carried parameters: the downlink RSRP boundary value (voice service) and downlink RSRP boundary value (data service) of the interfered cell.

Mode B: five parameters are carried;

the content of the carried parameters: the downlink RS transmitted power of the local cell, the number of receiving antennas AntNum of the local cell, the uplink noise interference (NI) power of the local cell, the minimum receiving $SINR_{traffic}$ (voice) of the local cell and the minimum receiving $SINR_{traffic}$ (data) of the local cell.

In practical applications, when the interfered state of the local cell changes, for example, when the local cell changes from a normal cell to an interfered state, an interfered state update message should be transmitted to configured neighboring cells. In contrast, when the local cell changes from an interfered cell to a normal cell, an interfered state update message should be also transmitted to configured neighboring cells, such that the surrounding neighboring cells reset the state of the local cell to be normal upon receiving the interfered state update message, and set the interference-related parameters of the local cell as invalid parameters.

In practical applications, when the local cell receives a notification of uplink interference disappearance transmitted by the base station baseband, the local cell may also execute the following operations:

1. updating its own state to normal;

2. stopping the refresh process of acquiring measurement values of all UEs in the cell, and emptying parameters related to the calculation of the normal region. In this case, all communication processes are processed as processes when the base station is in a normal state.

In the interference processing method provided in this embodiment, when it is known that the local cell is subjected to uplink interference, a normal region and an interference region of the local cell itself are determined by calculating the downlink RSRP boundary value of the local cell, and a UE (the downlink RSRP measurement value reported by this UE is less than the downlink RSRP boundary value) in the interference region (the user experience is poor in this region) is migrated timely through handover, so that the UE can avoid the influence from the uplink interference in the local cell. Therefore, the handover success rate and the user experience under uplink interference can be improved, and the normal region of the interfered cell can be utilized to a maximum extent.

Embodiment two of the present application provides another interference processing method, which is applied to a first communication node. With reference to FIG. 4, the method includes steps S1001 and S1002.

In the step S1001, a downlink reference signal received power (RSRP) boundary value of a cell is determined.

In the step S1002, when a downlink RSRP measurement value of this cell reported by a UE, that is to be handed in this cell, is less than the downlink RSRP boundary value, a handover request from the UE is rejected.

In a possible scheme, the downlink RSRP boundary value of the cell may be determined based on downlink reference signal transmitted power of the cell, a maximum uplink transmitted power of the UE, a noise interference power, the number of receiving antennas of the cell, a minimum receiving SINR and a preset compensation parameter.

In practical applications, the downlink RSRP boundary value can be calculated by the method described in Embodiment one, and it will not be repeated here.

In a possible scheme, before the step S202, the method further includes steps of:

acquiring, from the received handover request message, the downlink RSRP measurement value of the local cell reported by the UE to be handed-in;

when there is a voice service for the UE to be handed-in, determining whether the downlink RSRP measurement value is less than the $RSRP_{voice}$;

if the downlink RSRP measurement value is less than the $RSRP_{voice}$, determining the UE to be handed-in is beyond the boundary of the normal region;

when there is no voice service for the UE to be handed-in, determining whether the downlink RSRP measurement value is less than the $RSRP_{data}$; and

if the downlink RSRP measurement value is less than the $RSRP_{data}$, determining the UE to be handed-in is beyond the boundary of the normal region.

In some scenarios, when the local cell is used as a target cell for handover, the local cell may not know that it is a cell subjected to uplink interference until a handover. In this case, a target cell needs to decide whether to allow hand-in.

In practical applications, when a source cell of the UE to be handed-in initiates a handover, the Pcmax of the UE to be handed-in and the downlink RSRP measurement value of the local cell reported by the UE to be handed-in may be carried in the handover request a message of the S1 or X2.

Upon receiving the handover request message, the local cell acquires all parameters in this message, including the Pcmax of the UE to be handed-over and the downlink RSRP measurement value.

At this time, the local cell identifiers its own interfered state. If the local cell is a normal cell, the Pcmax of the handed-over UE and the RSRP both contained in the handover request message may be ignored, and processing is performed based on the conventional handover process. If the local cell is an uplink interfered cell, it is necessary to calculate the boundary of the normal region of the local cell and identify the service type of the UE to be handed in.

During the calculation of the boundary of the normal region of the local cell, the following parameters need to be acquired: the $RS_{power}$ of the local cell, the Pcmax of the UE to be handed-over, the NI of the local cell, the AntNum of the local cell and the $SINR_{traffic}$ of the local cell.

In practical applications, the $SINR_{traffic}$ can be acquired based on the service type of the UE to be handed-over.

If there is a voice service for the UE to be handed-over, the minimum receiving $SINR_{traffic}$ (voice) of this interfered cell is acquired; if the UE to be handed-over only has a data service, the minimum receiving $SINR_{traffic}$ (data) of this interfered cell is acquired.

During making a decision, if the UE to be handed-over has a voice service, then:
when the downlink RSRP measurement value reported by the UE to be handed-in is greater than or equal to the downlink RSRP boundary value (voice) of the local cell, it is indicated that the UE to be handed-in is already within the coverage of the normal region (voice) of the local cell, this handover is accepted, and an acknowledgement message is returned. Otherwise, it is indicated the UE to be handed-in is within the interference region, this handover is rejected, and a rejection message is returned.

If there is no voice service for the UE to be handed-over, then:
when the downlink RSRP measurement value reported by the UE to be handed-in is greater than or equal to the downlink RSRP boundary value (data) of the local cell, it is indicated that the UE to be handed-in is already within the coverage of the normal region (data) of the local cell, this handover is accepted, and an acknowledgement message is returned. Otherwise, it is indicated the UE to be handed-in is within the interference region, this handover is rejected, and a rejection message is returned.

It is to be noted that, in practical applications, the Pcmax of the UE to be handed-over may be omitted from the handover request message transmitted by the source cell because the Pcmax of most UEs is the same; and, the target cell may use a preset Pcmax value during the calculation of the downlink RSRP boundary cell.

In a possible scheme, when it is known that the local cell is an uplink interfered cell, the method further includes a step of:
transmitting an interfered state update message to a neighboring cell, the interfered state update message carrying the downlink RSRP boundary value of the local cell or a parameter for calculating the downlink RSRP boundary value of the local cell.

In practical applications, the interfered state update message can be transmitted to the neighboring cell by the method described in Embodiment one, and it will not be repeated here.

In the interference processing method provided in this embodiment, when it is known that the local cell is subjected to uplink interference, a normal region and an interference region of the local cell itself are determined by calculating the downlink RSRP boundary value of the local cell, and a handover request from a UE that is to be handed in the local cell and located beyond the boundary of the normal region (the downlink RSRP measurement value reported by this UE is less than the downlink RSRP boundary value) is rejected, so that the UE can avoid the influence from the uplink interference in the local cell. Therefore, the handover success rate and the user experience under uplink interference can be improved, and the normal region of the interfered cell can be utilized to a maximum extent.

Embodiment three of the present invention provides another interference processing method. In this embodiment, interference processing will be described by taking a base station 1 and a base station 2 as an example, where the base station 1 includes cells A and B, and the base station 2 includes cells C and D. The cell A contains a UE-A1 and a UE-A2, the cell B contains a UE-B, and the cell C contains a UE-C1 and a UE-C2. The UE-A1 has only a data service, the UE-A2 has a voice service, the UE-C1 has a data service, and UE-C2 has a voice service. The cells A, B, C and D are adjacent to each other, and communicate with each other by the X2. In this embodiment, necessary neighboring cell parameter information is already exchanged among the cells A, B, C and D by the X2. If an atmospheric waveguide interference appears suddenly, the base station 1 detects the appearance of the atmospheric waveguide interference and performs anti-interference processing. Meanwhile, the baseband of the base station 1 notifies high-level cells A and B of the existence of the atmospheric waveguide interference, and notifies them of the interference NI value.

For convenience of description, this embodiment will be described in different scenarios.

Scenario one: the cell A receives the notification from the base station, calculates the downlink RSRP boundary value of the local cell, and decides whether to migrate out UEs in the local cell.

In this scenario, the cell A may calculate the downlink RSRP boundary value of the local cell by two methods and then decide whether to migrate out UEs in the local cell.

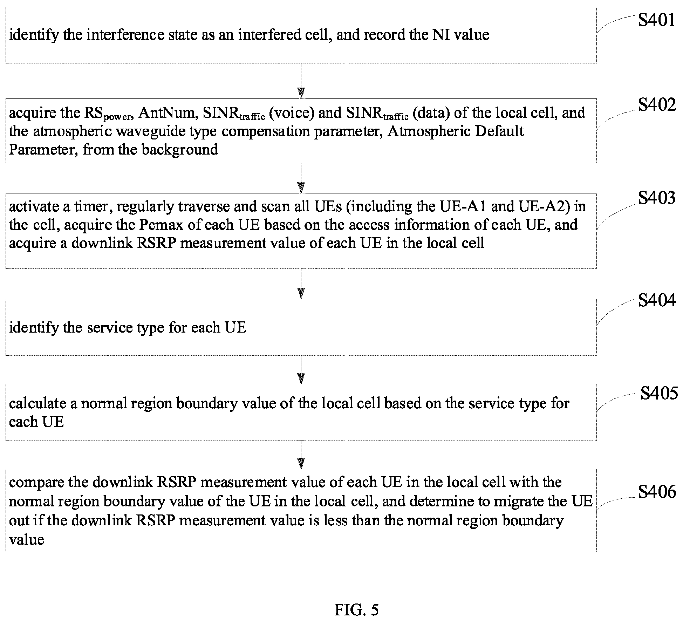

With reference to FIG. 5, the first method includes steps S401 to S406.

In the step S401, the interference state is identified as an interfered state, and the NI value is recorded.

In the step S402, the $RS_{power}$, AntNum, $SINR_{traffic}$ (voice) and $SINR_{traffic}$ (data) of the local cell, and an atmospheric waveguide type compensation parameter (Atmospheric Default Parameter) are acquired, from the background.

In the step S403, a timer is activated, all UEs (including the UE-A1 and UE-A2) in the cell are regularly traversed and scanned, the Pcmax of each UE is acquired according to access information of each UE, and the downlink RSRP measurement value of each UE in the local cell is acquired.

In the step S404, the service type of each UE is identified.

In the step S405, the downlink RSRP boundary value of each UE in the local cell is calculated based on the service type of each UE.

In the step S406, the downlink RSRP measurement value of each UE in the local cell is compared with the downlink RSRP boundary value of each UE in the local cell, and it is determined to migrate a UE out when the downlink RSRP measurement value thereof is less than the downlink RSRP boundary value.

In this scenario, when traversing to UE-A1, the Pcmax-A1 of the UE-A1 is acquired according to the access information of the UE-A1, and the downlink RSRP measurement value RSRP-A1 of the UE-A1 in the local cell is acquired. Then, the service type of the UE-A1 is identified as being of only a data service. Thus, the downlink RSRP boundary value of the UE-A1 in the local cell is calculated as R-A1 (data) according to the formula $RSRP_{data}$ = $RS_{power}$ - Pcmax + NI - 10Log(AntNum) + $SINR_{traffic}$(data)- IDP. The RSRP-A1 is compared with the R-A1 (data). Only when the RSRP-A1 is less than the R-A1 (data), it is determined to migrate the UE-A1 out.

When traversing to UE-A2, the Pcmax-A2 of the UE-A2 is acquired according to the access information of the UE-A2, and the downlink RSRP measurement value RSRP-A2 of the UE-A2 in the local cell is acquired. Then, the service type of the UE-A2 is identified as including a voice service. Thus, the downlink RSRP boundary value R-A2 (voice) of the voice service of the UE-A2 is calculated according to the formula $RSRP_{voice}$= $RS_{power}$ - Pcmax + NI - 10Log(AntNum) + $SINR_{traffic}$(voice)- IDP. The RSRP-A2 is compared with the R-A2 (voice). Only when the RSRP-A2 is less than the R-A2 (voice), it is determined to migrate the UE-A2 out.

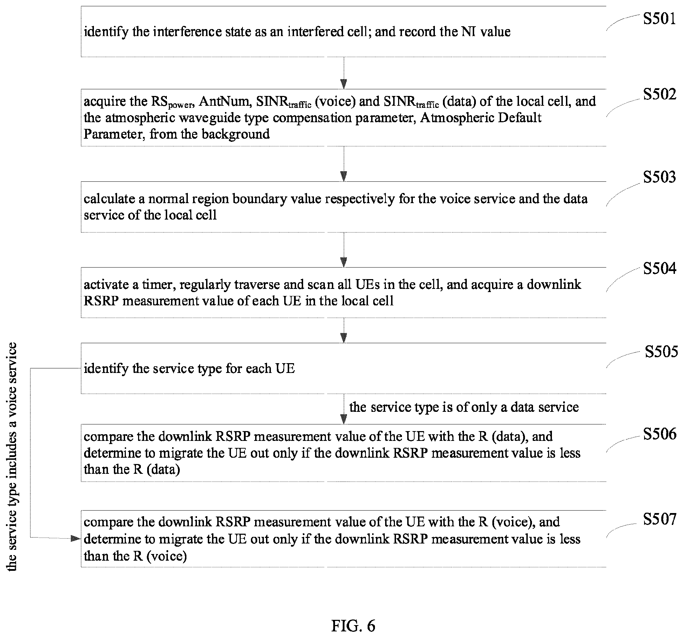

With reference to FIG. 6, the second method includes steps S501 to S507.

In the step S501, the interference state is identified as an interfered state, and the NI value is recorded.

In the step S502, the $RS_{power}$, AntNum, $SINR_{traffic}$ (voice), $SINR_{traffic}$ (data), the preset Pcmax value of the local cell and the atmospheric waveguide type compensation parameter (Atmospheric Default Parameter) are acquired, from the background.

In the step S503, downlink RSRP boundary values of a voice service and a data service of the local cell are calculated.

In an embodiment, the downlink RSRP boundary value R(voice) of the voice service = RS - Pcmax + NI - 10Log(AntNum) + $SINR_{traffic}$(voice)- Atmospheric Default Parameter;

the downlink RSRP boundary value R(data) of the data service = RS - Pcmax + NI - 10Log(AntNum) + $SINR_{traffic}$ (data)- Atmospheric Default Parameter.

In the step S504, a timer is activated, all UEs in the cell are regularly traversed and scanned, and the downlink RSRP measurement value of each UE in the local cell is acquired.

In the step S505, the service type of each UE is identified. When the UE carries out a service type of only a data service, the step S506 will be executed; when the UE carries out a service type including a voice service, the step S507 will be executed.

In the step S506, the downlink RSRP measurement value of the UE is compared with the R (data), and it is determined to migrate the UE out only when the downlink RSRP measurement value is less than the R (data).

In the step S507, the downlink RSRP measurement value of the UE is compared with the R (voice), and it is determined to migrate the UE out only when the downlink RSRP measurement value is less than the R (voice).

In this scenario, when traversing to the UE-A1, the downlink quality measurement value RSRP-A1 of the UE-A1 in the local cell is acquired, the service type of the UE-A1 is identified as being of only a data service, the RSRP-A1 is compared with the R (data), and it is determined to migrate the UE-A1 out only when the RSRP-A1 is less than the R (data).

When traversing to the UE-A2, the downlink quality measurement value RSRP-A2 of the UE-A2 in the local cell is acquired, the service type of the UE-A2 is identified as including a voice service, the RSRP-A2 is compared with the R (voice), and it is determined to migrate the UE-A2 out only when the RSRP-A2 is less than the R (voice).

Scenario two: the cell A transmits an interfered state update message to a neighboring cell (in this scenario, the interfered state of the cell A itself is already updated, that is, the Scenario one already occurs).

The interfered state update message transmitted to the neighboring cell by the cell A may carry an interference identifier and interference-related parameters. There are two modes for the number and content of the carried parameters.

Mode one: Parameters for calculating the downlink RSRP boundary value is transmitted. In this case, the parameters to be transmitted for calculating the downlink RSRP boundary value, carried by an interfered state message, will be configured in the background.

The method of this mode includes steps 1, 2 and 3.

In the Step 1: Parameters configured in the background for calculating a normal region are acquired, wherein the parameters will be carried by an interfered state update message.

In the Step 2: An X2 interfered state update message is filled, wherein the message includes the following:

State: interfered;

Number of parameters: 4;

the number of receiving antennas AntNum in the cell A;

the $SINR_{traffic}$ (voice) of the cell A;

the $SINR_{traffic}$ (data) of the cell A;

the NI value of the cell A.

In the Step 3: The interfered state update message is transmitted to neighboring cells B, C and D.

In this case, upon receiving the interfered state update message from the cell A, a neighboring cell identifies the state of the cell A as an interfered cell, and acquires the type of parameters carried by the interfered state update message: with five calculation parameters. The calculation parameters are read and stored in the identifier of the cell A. The calculation parameters include:

State of the cell A: interfered;

Number of interference calculation parameters for the cell A: 4;

the number of receiving antennas, AntNum in the cell A;

the $SINR_{traffic}$ (voice) of the cell A;

the $SINR_{traffic}$ (data) of the cell A;

the NI value of the cell A;

the Atmospheric Default Parameter acquired from the background by the local cell.

Mode two: the downlink RSRP boundary value is directly transmitted, and the downlink RSRP boundary value to be transmitted, carried by the interfered state message, will be configured in the background.

The method of this mode includes steps 1, 2 and 3.

In the Step 1: Values configured in the background for calculating the normal region are acquired, wherein the values will be carried by an interfered state update message.

In the Step 2: An X2 interfered state update message is filled, wherein the message includes the following:

State: interfered;

Parameter type: downlink RSRP boundary value;

the downlink RSRP boundary values R (data) and R (voice).

In the Step 3: The cell A transmits the message to neighboring cells B,C and D.

Upon receiving the interfered state update message from the cell A, a neighboring cell identifies the state of the cell A as an interfered cell, and acquires the type of parameters carried by the interfered state update message: with two downlink RSRP boundary values. The downlink RSRP boundary values are read and stored in the identifier of the cell A. The calculation parameters include:

State of the cell A: interfered;

Number of downlink RSRP boundary values of the cell A: 2;

the downlink RSRP boundary values R (voice) and R (data) of the cell A.

Scenario three: Migration strategy for the cell A (for screening candidate handover target cells).

In this scenario, the cells A and B have completed the updating of their interfered state in Scenario one and the updating of the interfered state information of neighboring cells in Scenario two. Since the cells A, B, C and D are adjacent to each other, the interfered state information of all the neighboring cells are updated. The priority of using cells B, C and D as a candidate cell is B, C and D. The UE-A1 in the cell A is decided to be migrated out.

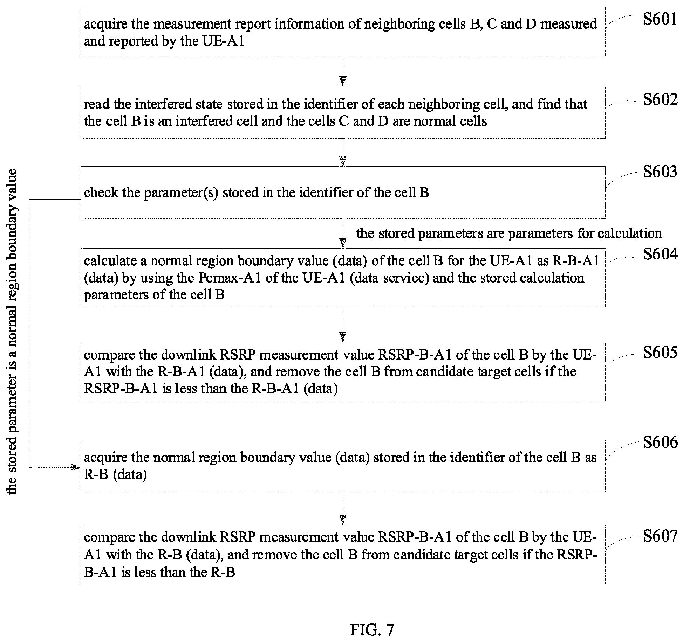

With reference to FIG. 7, this method includes steps S601 to S607.

In the step S601, measurement report information of neighboring cells B, C and D, measured and reported by the UE-A1, is acquired.

In the step S602, the interfered state stored in the identifier of each neighboring cell is read, and it is found that the cell B is an interfered cell and the cells C and D are normal cells.

In the step S603, parameters stored in the identifier of the cell B are checked. When the stored parameters are parameters for calculating the normal region boundary values, the steps S604 and S605 will be executed; when the stored parameters are the downlink RSRP boundary values, the steps S606 and S607 will be executed.

In the step S604, the downlink RSRP boundary value (data) of the cell B for the UE-A1 is calculated as R-B-A1 (data) by using the Pcmax-A1 of the UE-A1 (data service) and the stored calculation parameters of the cell B.

In the step S605, the downlink RSRP measurement value RSRP-B-A1 of the cell B from the UE-A1 is compared with the R-B-A1 (data); and, the cell B is removed from candidate target cells if the RSRP-B-A1 is less than the R-B-A1 (data).

In the step S606, the downlink RSRP boundary value (data) stored in the identifier of the cell B is acquired as R-B (data).

In the step S607, the downlink RSRP measurement value RSRP-B-A1 of the cell B from the UE-A1 is compared with the R-B (data); and, the cell B is removed from candidate target cells if the RSRP-B-A1 is less than the R-B.

In this scenario, if the cell B is removed from candidate target cells, the normal cells C and D are decided according to a conventional handover decision process. Otherwise, the cell B and the normal C and D cells are decided according to the conventional handover decision process.

Scenario four: the UE-C1 in the cell C initiates a handover decision due to movement.

In this scenario, the cells C and D are normal cells, the cells A and B are interfered cells, and the cells A, B, C and D have completed the updating of their interfered state and the updating of interfered state information of neighboring cells in Scenario one and two.

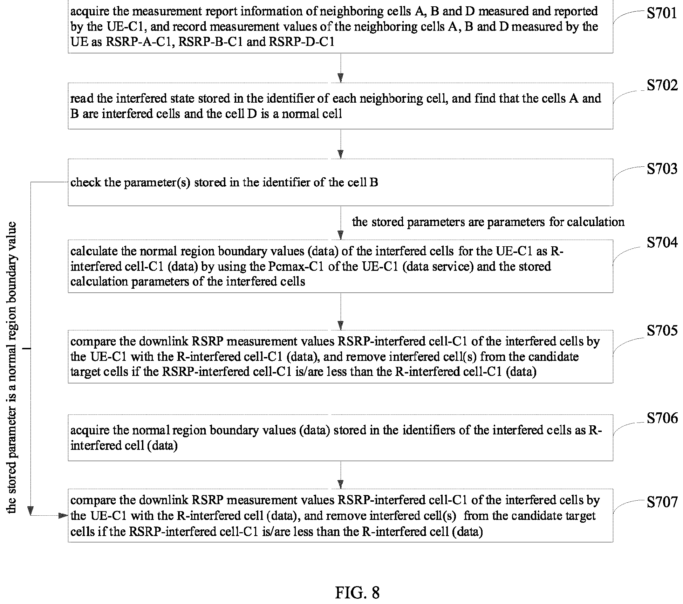

With reference to FIG. 8, this method includes steps S701 to S707.

In the step S701, measurement report information of neighboring cells A, B and D measured and reported by the UE-C1 are acquired, and the measurement values of the neighboring cells A, B and D measured by this UE are recorded as the RSRP-A-C1, RSRP-B-C1 and RSRP-D-C1.

In this step, the neighboring cells A, B and D can be determined as candidate handover target cells based on the measurement report information of neighboring cells A, B and D measured and reported by the UE-C1, with a priority of A, B and D.

In the step S702, the interfered state stored in the identifier of each neighboring cell is read, and it is found that the cells A and B are interfered cells and the cell D is a normal cell.

In the step S703, the parameters stored in the identifiers of the interfered cells are checked; when the stored parameters are parameters for calculating the normal region boundary values, the steps S704 and S705 will be executed; and, when the stored parameters are downlink RSRP boundary values, the steps S706 and S707 will be executed.

In the step S704, the downlink RSRP boundary value (data) of an interfered cell for the UE-C1 is calculated as R-interfered cell-C1 (data) by using the Pcmax-C1 of the UE-C1 (data service) and the stored calculation parameters of the interfered cell.

In the step S705, the downlink RSRP measurement value RSRP-interfered cell-C1 of the interfered cell from the UE-C1 is compared with the R-interfered cell-C1 (data); and the interfered cell is removed from candidate target cells if the RSRP-interfered cell-C1 is less than the R-interfered cell-C1 (data).

In the step S706, the downlink RSRP boundary value (data) stored in the identifier of the interfered cell is acquired as R-interfered cell (data).

In the step S707, the downlink RSRP measurement value RSRP-interfered cell-C1 of the interfered cell from the UE-C1 is compared with the R-interfered cell (data); and the interfered cell is removed from candidate target cells if the RSRP-interfered cell-C1 is less than the R-interfered cell (data).

A decision on the cell A is taken as an example. After the cell C finds that the cell A is an interfered cell, in accordance with the service type of the UE-C1 being data type, the R-A-C1 (data) (i.e., the data downlink RSRP boundary value of the cell A obtained based on the PCmax of the UE-C1) or R-A (data) (i.e., the data downlink RSRP boundary value of the cell A obtained based on the PCmax configured in the background) of the cell A is acquired and compared with the RSRP-A-C1. When the RSRP-A-C1 is less than the R-A-C1 (data) (calculation is performed using the Pcmax of the UE) or when the RSRP-A-C1 is less than the R-A (data) (calculation is performed using the Pcmax configured in the background), the cell A is removed from candidate target cells.

The above steps are repeated to determine whether to remove the cell B.

By the above steps, a set of candidate target cells may be {A, B, D} or {A, D} or {B, D} or {D}. If the set is {D}, the cell D is directly selected as a handover target cell. If the set is not {D}, a handover target cell will be subsequently screened according to the process for a base station under a normal state.

Scenario five: the cell D decides whether to receive a handover request initiated by another cell.

In this scenario, the cell D is a normal cell, and the cell C already decides that the UE-C1 initiates a handover to the cell D. In this scenario, recently the atmospheric waveguide often appears, the handover request message transmitted to the cell D by the cell C carries the Pcmax-UEC1 of the UE-C1 and the downlink RSRP measurement value RSRP-D-C1 of the cell D from the UE-C1, to avoid a temporary occurrence of interference.

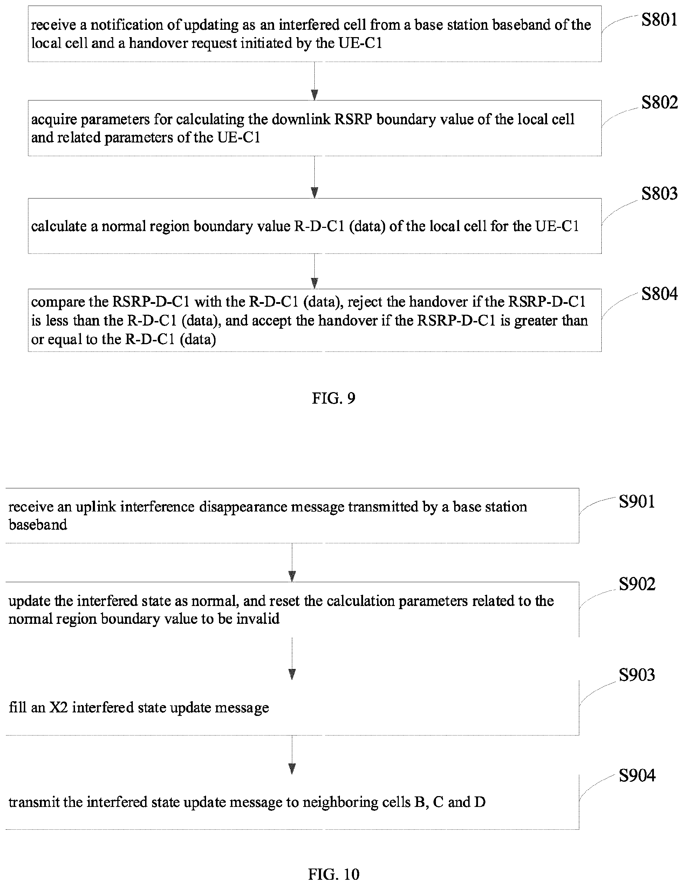

With reference to FIG. 9, this method includes steps S801 to S804.

In the step S801, a notification of updating as an interfered cell by the base station base band of the local cell, and a handover request initiated by the UE-C1, are received.

In the step S802, parameters for calculating the downlink RSRP boundary value of the local cell and related parameters of the UE-C1 are acquired.

The parameters for calculating the downlink RSRP boundary value include: the $RS_{power}$, AntNum, $SINR_{traffic}$ (data) and NI value of the local cell and the atmospheric waveguide type compensation (Atmospheric Default Parameter).

The related parameters of the UE-C1 include: the Pcmax of the UE-C1, the service type being data, and the downlink RSRP measurement RSRP-D-C1 reported by the UE-C1.

In the step 803, the downlink RSRP boundary value R-D-C1 (data) of the local cell for the UE-C1 is calculated.

In the step S804, the RSRP-D-C1 is compared with the R-D-C1 (data). The handover is rejected if the RSRP-D-C1 is less than the R-D-C1 (data); the handover is accepted if the RSRP-D-C1 is greater than or equal to the R-D-C1 (data).

Scenario six: the uplink interference disappears, and the interfered cell updates its own interfered state and notifies a neighboring cell.

In this scenario, the base station detects that the atmospheric waveguide interference disappears, and the base station baseband notifies all cells of this station originally covered by the atmospheric waveguide interference, i.e., cells A and B in this scenario. The following description will be given by taking the cell A as an example.

With reference to FIG. 10, this method includes steps S901 to S904.

In the step S901, an uplink interference disappearance message transmitted by the base station baseband is received.

In the step S902, the interfered state is updated as normal, and the calculation parameters related to the downlink RSRP boundary value are reset to be invalid.

In the step S903, an X2 interfered state update message is filled, wherein the message includes the following:

State: normal

Parameter type: null.

In the step S904, the interfered state update message is transmitted to neighboring cells B, C and D.

In this case, upon receiving the interfered state update message from the cell A, the neighboring cells B, C and D identify the state of the cell A as a normal cell, and the cell states of the neighboring cells B, C and D are updated. and all parameters for calculating the boundary of the normal cell of the cell A are reset to be invalid.

According to the interference processing method provided in this embodiment, when it is known that the local cell is subjected to uplink interference, a normal region and an interference region of the local cell are determined by calculating the downlink RSRP boundary value of the local cell, a UE in the interference region (where the user experience is poor) is timely migrated out through handover, and a handover request from a UE that is to be handed in the local cell and located beyond the boundary of the normal region is rejected, so that the UE can avoid the influence from the uplink interference in the local cell. Therefore, the handover success rate and the user experience under uplink interference can be improved, and the normal region of the interfered cell can be utilized to a maximum extent.

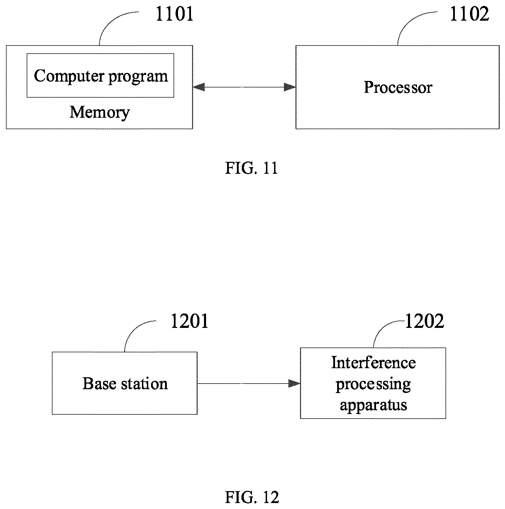

Embodiment four of the present invention provides an interference processing apparatus. With reference to FIG. 11, the apparatus includes: a memory 1101, a processor 1102 and a computer program stored in the memory and executable by the processor. When the computer program is executed by the processor, the method in Embodiment one, two or three is performed.

According to the interference processing apparatus provided in this embodiment, when it is known that the local cell is subjected to uplink interference, a normal region and an interference region of the local cell are determined by calculating the downlink RSRP boundary value of the local cell, a UE in the interference region (where the user experience is poor) is timely migrated out through handover, and a handover request from a UE that is to be handed in the local cell and located beyond the boundary of the normal region is rejected, so that the UE can avoid the influence from the uplink interference in the local cell. Therefore, the handover success rate and the user experience under uplink interference can be improved, and the normal region of the interfered cell can be utilized to a maximum extent.

Embodiment five of the present invention provides an interference processing system. With reference to FIG. 12, the system includes at least one base station 1201 and an interference processing apparatus 1202 arranged in a cell of the base station.

The base station 1201 is configured to detect interference to cells of the local base station, and transmit an uplink interference message to the interference processing apparatus in the interfered cell through a base station baseband when it is detected that a cell is subjected to uplink interference.

The interference processing apparatus 1202 is configured to migrate an interfered UE to a neighboring cell upon receiving the uplink interference message transmitted by the base station baseband of the local cell.

The interference processing apparatus 1202 may be the uplink interference apparatus described in Embodiment three, and will not be repeated here.

In this embodiment, based on the interference resistance by the base station, the interference processing system also notifies a high-level cell that it is an interfered cell, such that when an interfered cell known that it (referred to as the local cell) is subjected to uplink interference, a normal region and an interference region of the local cell are determined by calculating the downlink RSRP boundary value of the local cell, a UE in the interference region (where the user experience is poor) is timely migrated out through handover, and a handover request from a UE that is to be handed in the local cell and located beyond the boundary of the normal region is rejected, so that the UE can avoid the influence from the uplink interference in the local cell. Therefore, the handover success rate and the user experience under uplink interference can be improved, and the normal region of the interfered cell can be utilized to a maximum extent.

Embodiment six of the present invention provides a storage medium, including a program stored therein, which, upon running, control an apparatus where the storage medium is located to execute the operations in Embodiment one, two or three.

Those of ordinary skill in the art will appreciate that all or some of the steps in the methods, and systems disclosed above may be implemented as software, firmware, hardware, and suitable combinations thereof. In a hardware implementation, the division between functional blocks/elements mentioned in the above description does not necessarily correspond to the division of physical components; for example, one physical component may have multiple functions, or one function or step may be co-executed by several physical components. Some or all of the components may be implemented as software executed by a processor, such as a CPU, digital signal processor or microprocessor, or as hardware, or as an integrated circuit, such as an application specific integrated circuit. Such software may be distributed on a computer readable medium, which may include computer storage media (or non-transitory media) and communication media (or transitory media). As is well known to those of ordinary skill in the art, the term computer storage medium includes volatile and nonvolatile, removable and non-removable media implemented in any method or technology for storing information (such as computer readable instructions, data structures, program modules or other data). Computer storage media includes, but is not limited to, Random-Access Memory (RAM), Read-Only Memory (ROM), Electrically Erasable Programmable Read Only Memory (EEPROM), flash memory or other memory technology, Compact Disc Read-Only Memory (CD-ROM), Digital Versatile Disc (DVD) or other optical disc storage, magnetic cartridge, magnetic tape, magnetic disk storage or other magnetic storage device, or may any other medium used to store desired information and that can be accessed by a computer. Moreover, it is well known to those of ordinary skill in the art that communication media typically includes computer readable instructions, data structures, program modules, or other data in a modulated data signal, such as a carrier wave or other transport mechanism, and may include any information delivery media.

**Claims**

1. An interference processing method performed by a first communication node, **characterized in that** the method comprises steps of:

13

in response to a cell being subjected to uplink interference, determining a downlink reference signal received power boundary value called a downlink RSRP boundary value, of the cell to determine a normal region and an uplink interference region within a coverage range of the cell (S101);

receiving a downlink RSRP measurement value reported by a user equipment called UE in the cell (S102);

in response to the downlink RSRP measurement value being less than the downlink RSRP boundary value, determining that the UE is in the uplink interference region; and

migrating the UE in the uplink interference region out of the cell (S103);

wherein the downlink RSRP boundary value comprises at least one of a downlink RSRP boundary value of a voice service and a downlink RSRP boundary value of a data service.

2. The method according to claim 1, wherein the step of determining a downlink RSRP boundary value of a cell (S101) comprises:

determining the downlink RSRP boundary value of the cell based on: a downlink reference signal transmitted power of the cell, a maximum uplink transmitted power of the UE, an uplink noise interference power, a number of receiving antennas of the cell, a minimum receiving signal-to-interference-plus-noise ratio called a minimum receiving SINR, and a preset compensation parameter.

3. The method according to claim 2, wherein the minimum receiving SINR is defined as:

in response to the downlink RSRP boundary value comprising a downlink RSRP boundary value of a voice service, the minimum receiving SINR is a minimum receiving SINR of transmission for the voice service; or

in response to the downlink RSRP boundary value is of only a downlink RSRP boundary value of a data service, the minimum receiving SINR is a minimum receiving SINR of transmission for the data service.

4. The method according to claim 1, further comprising steps of:

receiving an interfered state message of a neighboring cell, and determining a downlink RSRP boundary value of the neighboring cell; and

in response to a downlink RSRP measurement value of a neighboring cell reported by the UE being greater than or equal to the downlink RSRP boundary value of the neighboring cell, selecting the neighboring cell as a candidate target cell for the UE.

5. The method according to claim 4, wherein the interfered state message of the neighboring cell carries the downlink RSRP boundary value of the neighboring cell; or

the interfered state message of the neighboring cell carries a parameter for calculating the downlink RSRP boundary value of the neighboring cell.

6. The method according to any one of claims 1 to 5, further comprising a step of:

transmitting an interfered state message to a neighboring cell, wherein the interfered state message carries the downlink RSRP boundary value of the neighboring cell or a parameter for calculating the downlink RSRP boundary value of the neighboring cell.

7. An interference processing method performed by a first communication node, **characterized in that** the method comprises steps of:

in response to a cell being subjected to uplink interference, determining a downlink reference signal received power boundary value called a downlink RSRP boundary value, of the cell to determine a normal region and an uplink interference region within a coverage range of the cell (S1001);

in response to a downlink RSRP measurement value of the cell reported by a user equipment called UE to be handed in the cell being less than the downlink RSRP boundary value, determining that the UE is in the uplink interference region; and

rejecting a handover request from the UE in the uplink interference region (S1002);

wherein the downlink RSRP boundary value comprises at least one of a downlink RSRP boundary value of a voice service and a downlink RSRP boundary value of a data service.

8. An interference processing apparatus, comprising:

a memory (1101),

a processor (1102), and
a computer program stored in the memory (1101) and executable by the processor (1102),
**characterized in that** the processor (1102) is configured to execute the computer program to perform the method according to any one of claims 1 to 7.

9. A storage medium storing at least one program, when executed by at least one processor of an interference processing apparatus, performs the method according to any one of claims 1 to 7.

**Patentansprüche**

1. Interferenzverarbeitungsverfahren, das von einem ersten Kommunikationsknoten ausgeführt wird,
**dadurch gekennzeichnet, dass** das Verfahren die folgenden Schritte umfasst:

als Reaktion darauf, dass eine Zelle einer Uplink-Interferenz unterzogen wird, Bestimmen eines Downlink-Referenzsignal-Empfangsleistungsgrenzwerts, der als Downlink-RSRP-Grenzwert bezeichnet wird, der Zelle, um einen normalen Bereich und einen Uplink-Interferenzbereich innerhalb eines Abdeckungsbereichs der Zelle zu bestimmen (S101);
Empfangen eines Downlink-RSRP-Messwerts, der von einem Benutzergerät, das als UE bezeichnet wird, in der Zelle gemeldet wird (S102);
als Reaktion darauf, dass der Downlink-RSRP-Messwert kleiner als der Downlink-RSRP-Grenzwert ist, Bestimmen, dass sich das UE in dem Uplink-Interferenzbereich befindet; und
Migrieren des UE in dem Uplink-Interferenzbereich aus der Zelle heraus (S103);
wobei der Downlink-RSRP-Grenzwert einen Downlink-RSRP-Grenzwert eines Stimmdienstes und/oder einen Downlink-RSRP-Grenzwert eines Datendienstes umfasst.

2. Verfahren nach Anspruch 1, wobei der Schritt des Bestimmens eines Downlink-RSRP-Grenzwerts einer Zelle (S101) Folgendes umfasst:
Bestimmen des Downlink-RSRP-Grenzwerts der Zelle basierend auf: einer Downlink-Referenzsignal-Sendeleistung der Zelle, einer maximalen Uplink-Sendeleistung des UE, einer Uplink-Rauschinterferenzleistung, einer Anzahl von Empfangsantennen der Zelle, einem minimalen Empfangssignal-zu-Interferenz-plus-Rausch-Verhältnis, das als minimales Empfangs-SINR bezeichnet wird, und einem voreingestellten Kompensationsparameter.

3. Verfahren nach Anspruch 2, wobei das minimale Empfangs-SINR definiert ist als: als

Reaktion darauf, dass der Downlink-RSRP-Grenzwert einen Downlink-RSRP-Grenzwert eines Stimmdienstes umfasst, ist das minimale Empfangs-SINR ein minimales Empfangs-SINR der Übertragung für den Stimmdienst; oder
als Reaktion darauf, dass der Downlink-RSRP-Grenzwert nur ein Downlink-RSRP-Grenzwert eines Datendienstes ist, ist das minimale Empfangs-SINR ein minimales Empfangs-SINR der Übertragung für den Datendienst.

4. Verfahren nach Anspruch 1, das ferner die folgenden Schritte umfasst:

Empfangen einer Störungszustandsnachricht einer Nachbarzelle und Bestimmen eines Downlink-RSRP-Grenzwerts der Nachbarzelle; und
als Reaktion darauf, dass ein Downlink-RSRP-Messwert einer Nachbarzelle, der von dem UE gemeldet wird, größer oder gleich dem Downlink-RSRP-Grenzwert der Nachbarzelle ist, Auswählen der Nachbarzelle als eine Kandidatenzielzelle für das UE.

5. Verfahren nach Anspruch 4, wobei die Störungszustandsnachricht der Nachbarzelle den Downlink-RSRP-Grenzwert der Nachbarzelle trägt; oder
die Störungszustandsnachricht der Nachbarzelle einen Parameter zum Berechnen des Downlink-RSRP-Grenzwerts der Nachbarzelle trägt.

6. Verfahren nach einem der Ansprüche 1 bis 5, das ferner den folgenden Schritt umfasst:
Senden einer Störungszustandsnachricht an eine Nachbarzelle, wobei die Störungszustandsnachricht den Downlink-RSRP-Grenzwert der Nachbarzelle oder einen Parameter zum Berechnen des Downlink-RSRP-Grenzwerts der Nachbarzelle trägt.

7. Interferenzverarbeitungsverfahren, das von einem ersten Kommunikationsknoten ausgeführt wird, **dadurch gekennzeichnet, dass** das Verfahren die folgenden Schritte umfasst:

als Reaktion darauf, dass eine Zelle einer Uplink-Interferenz unterzogen wird, Bestimmen eines Downlink-Referenzsignal-Empfangsleistungsgrenzwerts, der als Downlink-RSRP-Grenzwert bezeichnet wird, der Zelle, um einen normalen Bereich und einen Uplink-Interferenzbereich innerhalb eines Abdeckungsbereichs der Zelle zu bestimmen (S1001);
als Reaktion darauf, dass ein Downlink-RSRP-Messwert der Zelle, der von einem zu übergebenden Benutzergerät, das als UE bezeichnet wird, in der Zelle gemeldet wird, kleiner als der Downlink-RSRP-Grenzwert ist, Bestimmen, dass sich das UE in dem Uplink-Interferenzbereich befindet; und
Zurückweisen einer Übergabeanforderung von dem UE in dem Uplink-Interferenzbereich (S1002);
wobei der Downlink-RSRP-Grenzwert einen Downlink-RSRP-Grenzwert eines Stimmdienstes und/oder einen Downlink-RSRP-Grenzwert eines Datendienstes umfasst.

8. Interferenzverarbeitungsvorrichtung, umfassend:

einen Speicher (1101),
einen Prozessor (1102) und
ein Computerprogramm, das in dem Speicher (1101) gespeichert ist und von dem Prozessor (1102) ausführbar ist, **dadurch gekennzeichnet, dass** der Prozessor (1102) konfiguriert ist, das Computerprogramm auszuführen, um das Verfahren nach einem der Ansprüche 1 bis 7 auszuführen.

9. Speichermedium, das mindestens ein Programm speichert, das, wenn es von mindestens einem Prozessor einer Interferenzverarbeitungsvorrichtung ausgeführt wird, das Verfahren nach einem der Ansprüche 1 bis 7 ausführt.

**Revendications**

1. Procédé de traitement d'interférences exécuté par un premier nœud de communication, **caractérisé en ce que** le procédé comprend les étapes suivantes :

en réponse à une cellule soumise à une interférence de liaison montante, déterminer une valeur limite de puissance reçue de signal de référence descendant appelée valeur limite RSRP de liaison descendante de la cellule afin de déterminer une région normale et une région d'interférence de liaison montante dans une plage de couverture de la cellule (S101) ;
recevoir une valeur de mesure de RSRP descendante reportée par un équipement d'utilisateur appelé UE dans la cellule (S102) ;
en réponse au fait que la valeur de mesure de RSRP de liaison descendante est inférieure à la valeur limite de RSRP de liaison descendante, déterminer que l'UE se trouve dans la région d'interférence de liaison montante ; et
faire migrer l'UE dans la région d'interférence de liaison montante hors de la cellule (S103) ;
où la valeur limite de RSRP de liaison descendante comprend au moins l'une d'une valeur limite de RSRP de liaison descendante d'un service vocal et d'une valeur limite de RSRP de liaison descendante d'un service de données.

2. Procédé selon la revendication 1, dans lequel l'étape de détermination d'une valeur limite de RSRP de liaison descendante d'une cellule (S101) comprend :
la détermination de la valeur limite de RSRP de liaison descendante de la cellule sur la base : d'une puissance transmise de signal de référence de liaison descendante de la cellule, d'une puissance transmise de liaison montante maximale de l'UE, d'une puissance d'interférence de bruit de liaison montante, d'un nombre d'antennes réceptrices de la cellule, d'un rapport signal/interférence plus bruit de réception minimum appelé SINR de réception minimum, et d'un paramètre de compensation prédéterminé.

3. Procédé selon la revendication 2, dans lequel le SINR de réception minimum est défini comme suit :

en réponse à la valeur limite de RSRP de liaison descendante comprenant une valeur limite de RSRP de liaison descendante d'un service vocal, le SINR de réception minimum est un SINR de réception minimum de transmission pour le service vocal ; ou

en réponse à la valeur limite de RSRP de liaison descendante qui ne correspond qu'à une valeur limite de RSRP de liaison descendante d'un service de données, le SINR de réception minimum est un SINR de réception minimum de transmission pour le service de données.

4. Procédé selon la revendication 1, comprenant en outre les étapes suivantes :

recevoir un message d'état perturbé d'une cellule voisine, et déterminer une valeur limite de RSRP descendante de la cellule voisine ; et

en réponse à une valeur de mesure de RSRP de liaison descendante d'une cellule voisine signalée par l'UE qui est supérieure ou égale à la valeur limite de RSRP de liaison descendante de la cellule voisine, sélectionner la cellule voisine en tant que cellule cible candidate pour l'UE.

5. Procédé selon la revendication 4, dans lequel le message d'état perturbé de la cellule voisine transporte la valeur limite de RSRP de liaison descendante de la cellule voisine ; ou

le message d'état perturbé de la cellule voisine transporte un paramètre pour calculer la valeur limite de RSRP de liaison descendante de la cellule voisine.

6. Procédé selon l'une quelconque des revendications 1 à 5, comprenant en outre l'étape suivante :
transmettre un message d'état perturbé à une cellule voisine, le message d'état perturbé transportant la valeur limite de RSRP descendante de la cellule voisine ou un paramètre pour calculer la valeur limite de RSRP descendante de la cellule voisine.

7. Procédé de traitement d'interférences exécuté par un premier nœud de communication, **caractérisé en ce que** le procédé comprend les étapes suivantes :

en réponse à une cellule soumise à une interférence de liaison montante, déterminer une valeur limite de puissance reçue de signal de référence descendant appelée valeur limite RSRP de liaison descendante de la cellule afin de déterminer une région normale et une région d'interférence de liaison montante dans une plage de couverture de la cellule (S1001) ;

en réponse au fait qu'une valeur de mesure de RSRP de liaison descendante de la cellule signalée par un équipement utilisateur appelé UE à être transféré dans la cellule est inférieure à la valeur limite de RSRP de liaison descendante, déterminer que l'UE se trouve dans la région d'interférence de liaison montante ; et rejeter une requête de transfert intercellulaire de l'UE

dans la région d'interférence de liaison montante (S1002) ;

où la valeur limite de RSRP de liaison descendante comprend au moins l'une d'une valeur limite de RSRP de liaison descendante d'un service vocal et d'une valeur limite de RSRP de liaison descendante d'un service de données.

8. Appareil de traitement d'interférences, comprenant :

une mémoire (1101),

un processeur (1102), et

un programme d'ordinateur stocké dans la mémoire (1101) et exécutable par le processeur (1102),

**caractérisé en ce que** le processeur (1102) est configuré pour exécuter le programme d'ordinateur pour mettre en œuvre le procédé selon l'une quelconque des revendications 1 à 7.

9. Support de stockage stockant au moins un programme qui, lorsqu'il est exécuté par au moins un processeur d'un appareil de traitement d'interférences, exécute le procédé selon l'une quelconque des revendications 1 à 7.

determine a downlink reference signal received power, RSRP, boundary value of a cell     S101

receive a downlink RSRP measurement value reported by a user equipment, UE     S102

if the downlink RSRP measurement value is less than the downlink RSRP boundary value, migrate the UE out of the cell     S103

FIG. 1

Cell coverage range

Interference region

Normal region

FIG. 2

Cell coverage range

Interference region

Normal region

Cell proceeding
a handover decision

the UE to be migrated is
within an interference region
of a neighboring cell

the UE to be migrated is
within a normal region of a
neighboring cell

FIG. 3

determine a downlink reference signal received power, RSRP, boundary value of a
cell
— S1001

if a downlink RSRP measurement value of the cell reported by a UE to be handed in
the cell is less than the downlink RSRP boundary value, reject a handover request
from the UE
— S1002

FIG. 4

identify the interference state as an interfered cell, and record the NI value — S401

acquire the $RS_{power}$, AntNum, $SINR_{traffic}$ (voice) and $SINR_{traffic}$ (data) of the local cell, and the atmospheric waveguide type compensation parameter, Atmospheric Default Parameter, from the background — S402

activate a timer, regularly traverse and scan all UEs (including the UE-A1 and UE-A2) in the cell, acquire the Pcmax of each UE based on the access information of each UE, and acquire a downlink RSRP measurement value of each UE in the local cell — S403

identify the service type for each UE — S404

calculate a normal region boundary value of the local cell based on the service type for each UE — S405

compare the downlink RSRP measurement value of each UE in the local cell with the normal region boundary value of the UE in the local cell, and determine to migrate the UE out if the downlink RSRP measurement value is less than the normal region boundary value — S406

FIG. 5

identify the interference state as an interfered cell; and record the NI value ⌐ S501

acquire the $RS_{power}$, AntNum, $SINR_{traffic}$ (voice) and $SINR_{traffic}$ (data) of the local cell, and the atmospheric waveguide type compensation parameter, Atmospheric Default Parameter, from the background ⌐ S502

calculate a normal region boundary value respectively for the voice service and the data service of the local cell ⌐ S503

activate a timer, regularly traverse and scan all UEs in the cell, and acquire a downlink RSRP measurement value of each UE in the local cell ⌐ S504

identify the service type for each UE ⌐ S505

the service type is of only a data service

compare the downlink RSRP measurement value of the UE with the R (data), and determine to migrate the UE out only if the downlink RSRP measurement value is less than the R (data) ⌐ S506

compare the downlink RSRP measurement value of the UE with the R (voice), and determine to migrate the UE out only if the downlink RSRP measurement value is less than the R (voice) ⌐ S507

the service type includes a voice service

FIG. 6

| acquire the measurement report information of neighboring cells B, C and D measured and reported by the UE-A1 | S601 |

| read the interfered state stored in the identifier of each neighboring cell, and find that the cell B is an interfered cell and the cells C and D are normal cells | S602 |

| check the parameter(s) stored in the identifier of the cell B | S603 |

the stored parameters are parameters for calculation

| calculate a normal region boundary value (data) of the cell B for the UE-A1 as R-B-A1 (data) by using the Pcmax-A1 of the UE-A1 (data service) and the stored calculation parameters of the cell B | S604 |

| compare the downlink RSRP measurement value RSRP-B-A1 of the cell B by the UE-A1 with the R-B-A1 (data), and remove the cell B from candidate target cells if the RSRP-B-A1 is less than the R-B-A1 (data) | S605 |

the stored parameter is a normal region boundary value

| acquire the normal region boundary value (data) stored in the identifier of the cell B as R-B (data) | S606 |

| compare the downlink RSRP measurement value RSRP-B-A1 of the cell B by the UE-A1 with the R-B (data), and remove the cell B from candidate target cells if the RSRP-B-A1 is less than the R-B | S607 |

FIG. 7

acquire the measurement report information of neighboring cells A, B and D measured and reported by the UE-C1, and record measurement values of the neighboring cells A, B and D measured by the UE as RSRP-A-C1, RSRP-B-C1 and RSRP-D-C1 — S701

read the interfered state stored in the identifier of each neighboring cell, and find that the cells A and B are interfered cells and the cell D is a normal cell — S702

check the parameter(s) stored in the identifier of the cell B — S703

the stored parameters are parameters for calculation

calculate the normal region boundary values (data) of the interfered cells for the UE-C1 as R-interfered cell-C1 (data) by using the Pcmax-C1 of the UE-C1 (data service) and the stored calculation parameters of the interfered cells — S704

compare the downlink RSRP measurement values RSRP-interfered cell-C1 of the interfered cells by the UE-C1 with the R-interfered cell-C1 (data), and remove interfered cell(s) from the candidate target cells if the RSRP-interfered cell-C1 is/are less than the R-interfered cell-C1 (data) — S705

acquire the normal region boundary values (data) stored in the identifiers of the interfered cells as R-interfered cell (data) — S706

compare the downlink RSRP measurement values RSRP-interfered cell-C1 of the interfered cells by the UE-C1 with the R-interfered cell (data), and remove interfered cell(s) from the candidate target cells if the RSRP-interfered cell-C1 is/are less than the R-interfered cell (data) — S707

the stored parameter is a normal region boundary value

FIG. 8

receive a notification of updating as an interfered cell from a base station baseband of the local cell and a handover request initiated by the UE-C1 — S801

acquire parameters for calculating the downlink RSRP boundary value of the local cell and related parameters of the UE-C1 — S802

calculate a normal region boundary value R-D-C1 (data) of the local cell for the UE-C1 — S803

compare the RSRP-D-C1 with the R-D-C1 (data), reject the handover if the RSRP-D-C1 is less than the R-D-C1 (data), and accept the handover if the RSRP-D-C1 is greater than or equal to the R-D-C1 (data) — S804

FIG. 9

receive an uplink interference disappearance message transmitted by a base station baseband — S901

update the interfered state as normal, and reset the calculation parameters related to the normal region boundary value to be invalid — S902

fill an X2 interfered state update message — S903

transmit the interfered state update message to neighboring cells B, C and D — S904

FIG. 10

1101        1102

| Memory |
| Computer program |

Processor

FIG. 11

1201     1202

| Base station | → | Interference processing apparatus |

FIG. 12

**EP 3 761 705 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016112530 A1
- US 2014064253 A1
- WO 2012154100 A1